# EUROPEAN PATENT APPLICATION

(11) **EP 2 239 785 A2**
(43) Date of publication of application: **13.10.2010**
(21) Application number: 10157781.5
(22) Date of filing: 25.03.2010
(51) Int. Cl.: H01L 31/048, H01L 31/02, H01L 31/042

(54) **Connecting device for a photovoltaic solar module, method for the production thereof and solar installation with such a connecting device**

(30) Priority: 09.04.2009 DE 102009017052
(71) Applicant: Tyco Electronics AMP GmbH, 64625 Bensheim (DE)
(72) Inventor: Schaarschmidt, Manfred, 64686, Lautertal (DE); Kosch, Bernd, 64625, Bensheim (DE)
(74) Representative: Klunker . Schmitt-Nilson . Hirsch

(57) **Abstract**

A connecting device (1) for connection to an electrical connection system (3, 104) of a photovoltaic solar module (100) comprises a connector housing (10) for arrangement on the solar module, at least one current-carrying component (21-24) arranged in the connector housing and a plurality of diode bodies (31, 32), which are connected together into a preassembled diode chain (30), which is connected to the current-carrying component. The diode bodies here comprise a first diode body (31) and a second diode body (32), which are connected to a common diode lead (62) and are connected together by the common diode lead (62). Manufacturing costs may be reduced by providing, gripping and electrically connecting the diode chain (30) as a whole when producing the connecting device.

## Description

The present invention relates to a connecting device for connection to an electrical connection system of a photovoltaic solar module, having a connector housing for arrangement on the solar module, at least one current-carrying component arranged in the connector housing and a plurality of diode bodies, which are connected to the current-carrying component. Furthermore the invention relates to a method of producing such a connecting device and to a solar installation with a solar module and with such a connecting device fitted to the solar module.

In a typical embodiment, a photovoltaic solar module comprises a panel-type multilayer arrangement with solar cells arranged between two outer layers, which generate electricity through a photovoltaic effect. The solar cells are generally arranged in a corresponding space between the outer layers and are interconnected within the multilayer arrangement with an electrical connection system. Embodiments of solar modules are known, in which the electrical connection system of the solar cells on the rear of the solar module remote from the light-exposed side is connected on the outside by means of electrical conductors, for example in the form of connecting foils, for example to a consumer. These connecting foils are connected in one or more connecting devices, for example in the form of a terminal box or a junction box, to one or more electrical conductors of a connecting lead. To this end, such a connecting device comprises one or more current-carrying components disposed in a connector housing, to which may be connected, on the one hand, one or more connecting foils of the solar module and, on the other hand, one or more electrical conductors of one or more connecting cables. In addition, one or more diodes may be contained in such a connecting device, which diodes are provided in order to prevent circulating currents between sunlight-exposed solar cells and shaded solar cells, which supply different solar currents and solar voltages. By means of such "bypass diodes", it is possible to continue operating the module even when it is partially shaded and with corresponding reduced power.

In conventional connecting devices of this kind, also known as solar junction or connecting boxes, a plurality of such bypass diodes are connected individually with the current-carrying components. For example, in a connecting device with four current-carrying components in the form of busbars, which are arranged parallel to one another, three individual bypass diodes are provided, which in each case connect together two busbars arranged adjacent one another. To this end, the individual bypass diodes are gripped in a mounting step provided therefor by a mounting operator or by a mounting device and individually mounted on in each case two of the busbars, by connecting the diode leads exiting on both sides of a diode body to the corresponding busbar. The busbars arranged in the connector housing are in turn connected to one or more electrical conductors extending out of the solar module. Provision is made, for example, for the contact path ends extending out of the solar module to be placed on or around terminal contacts of the busbars and then fixed to the busbars by suitable spring elements. A disadvantage in the production of such connecting devices consists in particular in the fact that arrangement and mounting of the busbars and contacting of the bypass diodes is comparatively complex.

It is an object of the present invention to provide a connecting device of the above-mentioned type which is comparatively simple and inexpensive to produce.

This object is achieved by a connecting device according to the features of claim 1. The invention further relates to a solar installation according to the features of claim 10 and to a method of producing a connecting device according to the features of claim 11.

The invention offers the advantage that, by providing a preassembled diode chain, production of a connecting device of the above-mentioned type may be simplified and made less expensive to carry out. In particular it is possible, by providing a preassembled diode chain, i.e. a plurality of diode bodies which have already been connected together into a diode chain before being fitted together with the current-carrying component(s), on the one hand to reduce parts costs for production and provision of the bypass diodes, while on the other hand the diodes may be mounted more effectively on the current-carrying component(s) because, instead of individual diodes, an already preassembled diode chain of a plurality of diodes is provided and mounted. By gripping and mounting the diode chain, a plurality of bypass diodes to be provided in the connector housing may thus be mounted all at once and connected to the corresponding current-carrying component(s), such that it is no longer necessary to connect a plurality of individual bypass diodes individually to current-carrying components in a mounting step provided therefor.

The diode chain is connected for example between two of the diode bodies with the or at least one of the current-carrying components. This may be achieved by suitable connecting methods, such as in particular by welding, crimping, soldering, insulation displacement or plugging in.

In particular, the diode bodies comprise a first diode body and a second diode body, which are connected to a common diode lead and are connected together by the common diode lead. In other words the diode bodies which are connected together do not in each case comprise two diode arms or diode leads, with mutually facing diode arms of diode bodies being connected together, but rather comprise a common diode lead, which takes the form in particular of a single wire and connects the two diode bodies together. The diode chain thus comprises diode bodies interconnected by way of respective common diode leads, said diode bodies being supplied by the diode manufacturer in this form. The common diode lead provided between two diode bodies may for example be attached to the or one of the current-carrying components by welding, crimping, soldering, insulation displacement or plugging in.

In one embodiment of the invention a plurality of current-carrying components are provided, which in each case take the form of a busbar, a first contact zone being provided on a first side for connection with at least one external electrical conductor, for example a connecting cable, and a second contact zone being provided on a second side opposite the first side for connection with the electrical connection system of the solar module.

In a further embodiment of the invention, the busbars are arranged approximately parallel to one another. The diode chain is arranged at an angle, in particular approximately perpendicularly, to the busbars, such that for example the diode bodies are arranged in each case between two mutually adjacent busbars. The diode chain may here be of substantially straight construction, the diode leads extending substantially straight out of the respective diode bodies and not being significantly bent, but rather leading substantially straight to the next diode body. In another embodiment, the diode chain may also be of meandering configuration. The diode leads extending out of the respective diode bodies for connection with the respective current-carrying components are here bent, while the diode bodies themselves may be arranged approximately parallel to the current-carrying components, which take the form for example of busbars.

When producing the connecting device, provision is made for example for the diode chain to be provided by being cut to length from a store of a plurality of connected-together diode bodies, before these are connected to the corresponding current-carrying component(s). For example, said store is formed by winding connected-together diode bodies onto a storage member. Such a store of connected-together diode bodies is favourable in particular if the diode leads between the diode bodies are comparatively flexible and bendy, such that they may be applied to a coil former or the like, and the diode bodies are of a comparatively small structural shape.

Further advantageous configurations and developments of the invention are stated in the subordinate claims.

The invention is explained in more detail below with reference to the Figures shown in the drawings, which illustrate exemplary embodiments of the present invention.
Fig. 1 shows a schematic cross-sectional view of an exemplary photovoltaic solar module, which is connected to a connecting device according to the invention,
Fig. 2A shows a schematic plan view of a connecting device of a first embodiment with current-carrying components arranged therein and a diode chain attached to the current-carrying components,
Fig. 2B shows a schematic side view of a current-carrying component with diode chain attached thereto as per the embodiment according to Fig. 2A,
Figs. 3A-D show various embodiments of a diode chain, differing in particular with regard to the arrangement of the respective diode bodies and the longitudinal axes thereof,
Fig. 4, 5 show schematic embodiments of a store of a plurality of connected-together diode bodies.

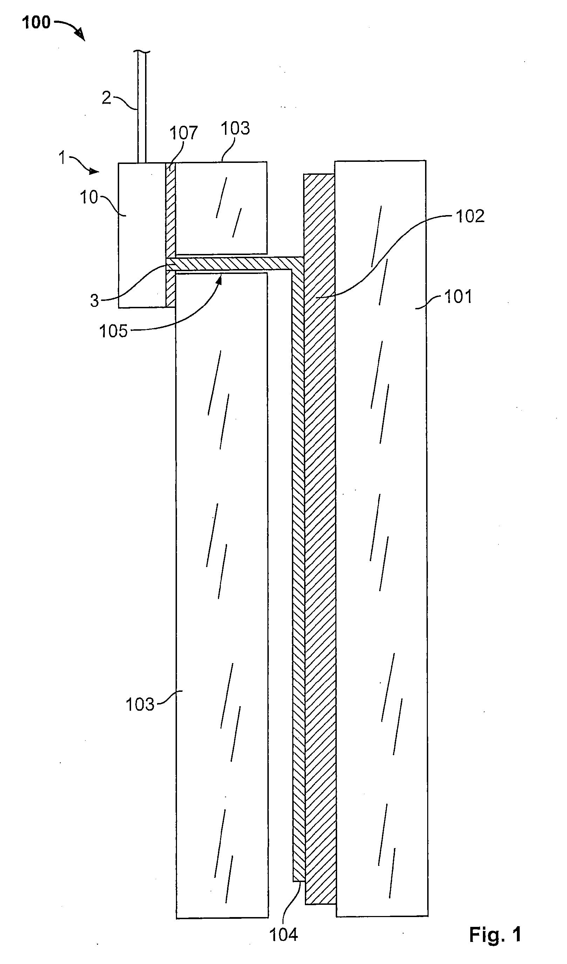

Fig. 1 is a schematic cross-sectional representation, not to scale, of a photovoltaic solar module, which is provided with a connecting device 1 in the form of a junction box or connecting box. The solar module 100 comprises a multilayer arrangement with a flat first layer 101 on the light-exposed side, which may take the form of a glass sheet or a film-type layer. Furthermore, the solar module 100 comprises a flat second layer 103 remote from the light-exposed side, which may likewise take the form of a glass sheet or a film-type layer. In the present embodiment layers 101 and 103 take the form of respective glass sheets. Between the two layers 101 and 103 there is located at least one solar cell 102 or an arrangement of a plurality of solar cells 102, which supply electricity by means of a photovoltaic effect when exposed to light. The solar cell(s) 102 is/are connected to an electrical connection system 104. This is merely indicated schematically in Fig. 1 and serves in particular to interconnect the solar cell(s) electrically and to connect them to the outside world. The electrical connection system 104 comprises for example a copper foil, which is on the one hand electrically contacted with the back of the solar cell(s) 102 and on the other hand develops into one or more electrical conductors 3 of the solar module or is connected to at least one electrical conductor 3 of the solar module, which takes the form for example of a connecting foil or of a connecting tape and extends out of the solar module. By means of one or more such foil conductors 3, the electrical connection system 104 of the solar module 100 may be connected to an external connecting lead 2, for example in the form of a solar connecting cable.

As is also illustrated in Fig. 1, a connecting device 1 with a connector housing 10, as explained below in more detail, is attached to the back of the layer 103, which forms an outer surface of the solar module, for example by adhesive bonding by means of adhesive 107. Furthermore, the layer 103 comprises a lead-through opening 105, through which the electrical conductor 3, for instance in the form of a foil conductor may be passed to the connecting device 1.

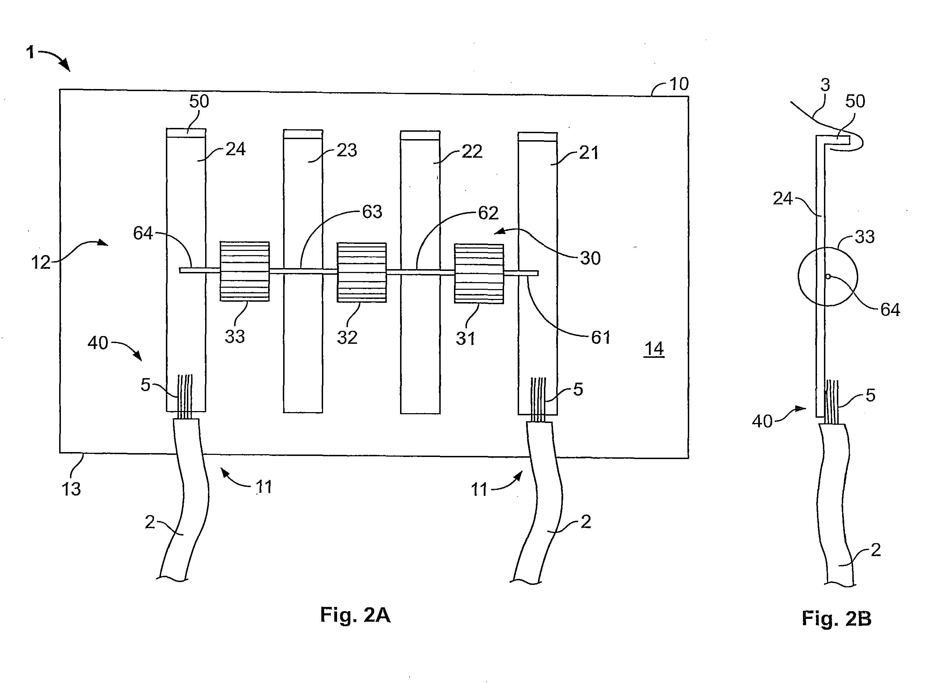

Figures 2A and 2B show an embodiment of a connector housing 10 with components arranged therein, as may be used for a connecting device 1 according to Figure 1. For example the connector housing 10, which is of box-like construction for example, contains four adjacently arranged current-carrying components 21 to 24, which here take the form of busbars of elongate construction. The connector housing 10 comprises a housing bottom 14, which may be fixed to the solar module 100 in the manner explained in greater detail with reference to Figure 1. The housing bottom 14 may for example be fixed by its underside to the back of a solar panel by means of a layer 107 of adhesive (Figure 1) or by another fixing means. A housing opening not shown in Figure 2 is provided in the housing bottom 14, through which opening electrical conductors of the connection system of the solar module, for example in the form of foil conductors 3 (Fig. 1), may be led into the box-shaped connector housing 10. Such foil conductors (not shown in Figure 2) may be connected by means of clamps to a contact zone 50 provided therefor on the busbars 21 to 24. As shown in Fig. 2B, the contact zone 50 takes the form for example of a contact zone bent upwards at right angles to the busbars 21 to 24, a foil conductor 3 extending out of the solar module being placed against or around the contact zone 50 and clamped in place by a suitable spring element (for example in the form of a Ω-spring). Furthermore, conductor lead-throughs 11 are provided in the side wall 13 of the connector housing 10 at the opposite side from the contact zones 50, through which lead-throughs one or more external electrical conductors of one or more connecting cables 2 may be led into the connector housing 10. In the present case the outer two busbars 21 and 24 comprise a respective contact zone 40, which is connected to the electrical conductor(s) 5 of a respective connecting cable 2. The two busbars 22 and 23 located in the middle are connected only in their contact zones 50 with a respective foil conductor of the solar module connection system.

The arrangement of the busbars 21 to 24 is here only to be regarded as an example and may also vary as required. In particular, the number of busbars used may vary as required, there being for example only three or indeed more than four busbars. Moreover, it is in principle possible for the busbars 21 and 24 and the conductor lead-throughs 11 to be arranged in the middle of the side wall 13 of the connector housing 10, while the busbars 22 and 23 may be arranged in the right- and left-hand peripheral areas of the connector housing 10.

As shown further in Figure 2, a diode chain 30 is formed by connected-together diode bodies 31 to 33. The diode chain 30 is here preassembled, i.e. it is attached as a whole in the already connected-together state to the busbars 21 to 24. In the embodiment according to Figure 2 diode bodies arranged adjacent one another are connected together by a common diode lead. In particular, on a first side the diode body 31 comprises a diode lead 61, which is connected to the busbar 21, and on the opposite side it comprises a diode lead 62, which is connected on the one hand to the diode body 31 and on the other hand also to the diode body 32 arranged adjacent the diode body 31, thus forming a common diode lead 62 for the diode bodies 31 and 32. In other words, the diode bodies 31 and 32 are interconnected by a common, single diode lead 62. On the opposite side from the diode body 31, the diode body 32 in turn comprises a diode lead 63, which is connected on the one hand to the diode body 32 and on the other hand to the diode body 33 adjacent the diode body 32, thus forming a common diode lead 63 for the diode bodies 32 and 33. On the opposite side from the diode body 32, the diode body 33 comprises a diode lead 64, which in the present exemplary embodiment terminates the diode chain 30. In the present exemplary embodiment the diode chain 30 thus comprises three connected-together diode bodies 31 to 33, which are applied as a whole, already connected together, to the busbars 21 to 24. In principle, the invention may be used with a diode chain which comprises at least two diode bodies.

In one embodiment of a manufacturing method the busbars 21 to 24 are initially arranged approximately parallel to one another, for example inserted into the interior 12 of the connector housing 10, as shown in Figure 2. Then the diode chain 30 is introduced into the interior 12 of the connector housing 10 by a mounting operator or a mounting device, the diode chain 30 being gripped as a whole and applied to the busbars 21 to 24. For connection with the busbars 21 to 24 the diode leads 61, 62, 63 and 64 are for example welded, crimped or soldered to the corresponding busbars 21 to 24 or plugged thereon. It is furthermore also possible to provide a corresponding insulation displacement contact on the respective busbar 21 to 24, into which contact the corresponding diode lead of the diode chain 30 may be introduced from above. In principle, any type of connection is possible which is suitable for connecting the diode leads 61 to 64 to the corresponding busbars 21 to 24. As shown in Figure 2A, in the connected state the diode chain 30 is arranged approximately perpendicularly to the busbars 21 to 24, the diode bodies 31 to 33 in each case being arranged between two busbars arranged adjacent one another. As shown in Figure 2B, the diode bodies 31 to 33 take the form, for example, of round diodes, but may in principle assume any other structural shape.

According to another type of production, the busbars 21 to 24 may be inserted into an appropriate tool and subsequently connected to the diode chain 30, before the arrangement thus formed is inserted into the interior 12 of the connector housing 10.

In the present embodiment, the current-carrying components take the form of individually assembled busbars, which are connected together by the bypass diodes formed by the diode bodies 31 to 33. It is also feasible, however, to replace individually assembled busbars for example with a printed circuit board with applied conductive tracks and/or with a corresponding punched grid with corresponding conductor tracks, onto which board or grid the diode chain 30 is suitably applied. An arrangement formed in this way thus comprises just one current-carrying component with a plurality of conductor tracks, which are connected in each case with appropriate parts of the diode chain.

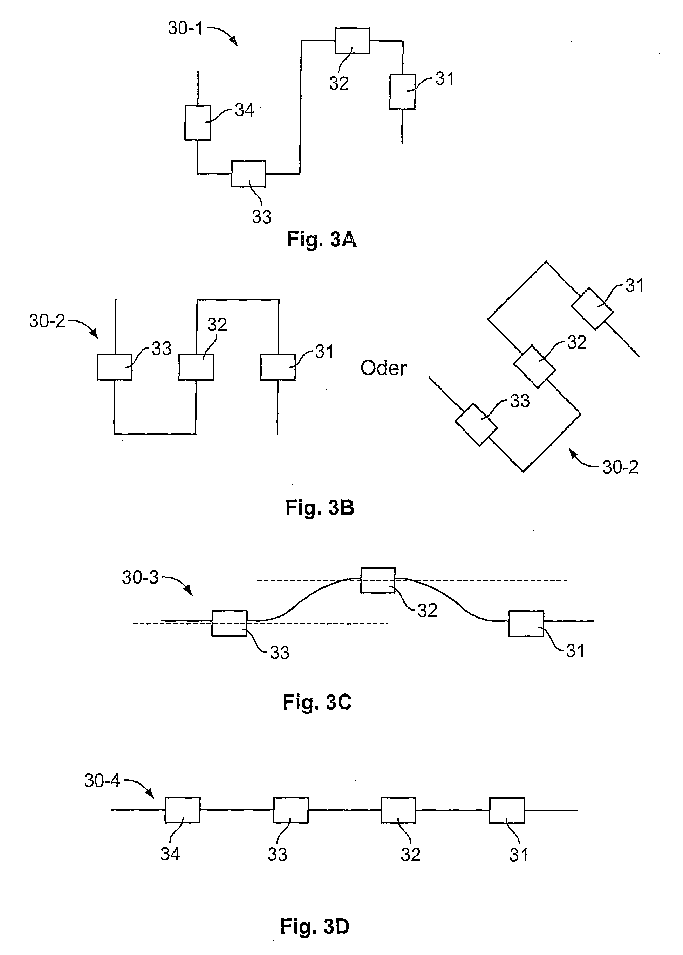

In Figure 2 the diode bodies 31 to 33 are arranged in each case between two mutually adjacent busbars, the diode chain 30 itself being substantially straight and arranged at an angle to the busbars. However a meandering configuration of the diode chain 30 is also possible, as shown in Fig. 3A by means of the exemplary diode chain 30-1, in which the diode leads are bent once or repeatedly between in each case two of the diode bodies 31 to 34, for example at a right angle. For the sake of clarity, the busbars are not shown here. It is preferable, however, for the diode bodies 31 to 34 to be arranged, in a busbar arrangement as shown in Fig. 2, in each case between two adjacent busbars. This type of construction is also applicable to the embodiments of the diode chain described below.

According to the embodiment according to Fig. 3B, the longitudinal axes of the respective diode bodies 31 to 33 of the diode chain 30-2 are provided and arranged parallel to one another. As shown, the diode leads between in each case two of the diode bodies 31 to 33 are bent twice, for example respectively at right angles. Such an arrangement of bypass diodes may under certain circumstances contribute to an even more compact arrangement of the components.

Fig. 3C shows an embodiment of a diode chain 30-3 in which the longitudinal axes of at least two of the diode bodies 31 to 33 of the diode chain are offset relative to one another in the longitudinal extent of the diode bodies. In this embodiment the longitudinal axes are arranged approximately parallel to one another.

Fig. 3D shows an embodiment of a diode chain 30-4 in which the longitudinal axes of the respective diode bodies 31 to 34 of the diode chain are aligned with one another in the longitudinal extent of the diode bodies.

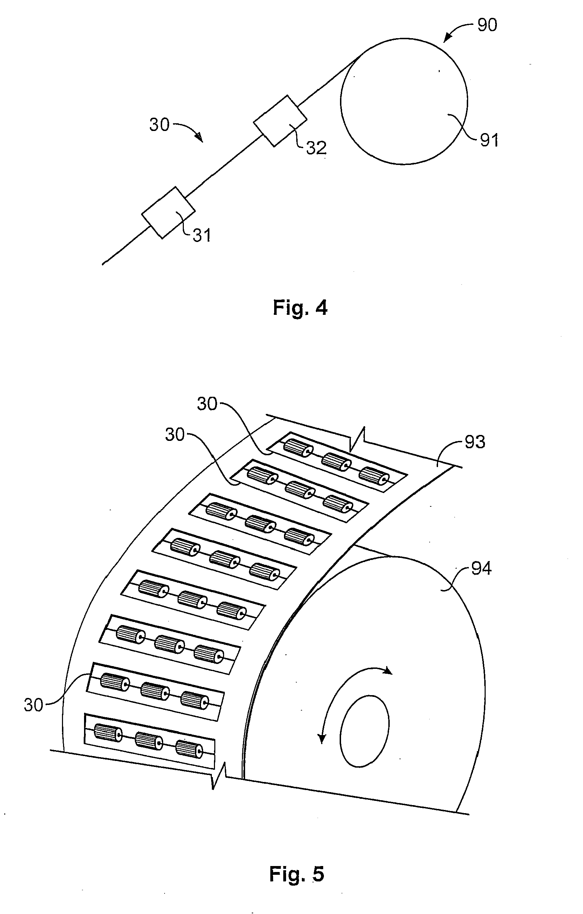

The diode chain 30 may, as shown highly schematically in Figure 4, be provided by being cut to length from a store 90, for example by being cut to length from a store of a plurality of series-connected diode bodies. The plurality of connected-together diode bodies are applied to a storage member 91 for example in the form of a coil. The storage member 91 may here be circular in shape, as shown in Figure 4, or indeed assume any other shape suitable for storing diodes. Unwinding and cutting a diode chain to a suitable length may be effected manually or automatically, as may the gripping and connecting of the diode chain with one or more current-carrying components.

Alternatively, a diode chain comprising a plurality of diode bodies may also be packaged in a "blister tape" or a tray or a tube. A tube is substantially a tubular structure in which the diodes are packaged. In a tray, the diodes are generally packaged in a single plane (instead of being wound up as in the case of tube). With tray packaging the diodes may likewise be packaged using a blister pack.

Fig. 5 shows one possible embodiment, in which a plurality of diode chains 30 are arranged across a support tape or tray 93 and in each case comprise for example two or three diode bodies, which are combined into respective units on the support tape or tray and may be stored on a storage member 94.

Advantages of the invention are thus in particular reduced costs for producing a connecting device compared with a connection method as described in the introduction. This may result from a reduction in the number of components, in that a preassembled diode chain is provided instead of individual bypass diodes, the chain combining a plurality of bypass diodes into one component, which may be produced and mounted correspondingly efficiently. This results in a reduction in the number and simplification of the components and the steps for assembly thereof.

## Claims

1. A connecting device (1) for connection to an electrical connection system (3, 104) of a photovoltaic solar module (100), having a connector housing (10) for arrangement on the solar module, at least one current-carrying component (21-24) arranged in the connector housing and a plurality of diode bodies (31, 32), which are connected together into a diode chain (30), which is connected to the current-carrying component, the diode bodies comprising a first diode body (31) and a second diode body (32), which are connected to a common diode lead (62) and connected together by the common diode lead (62).

2. A connecting device according to claim 1, **characterised in that** the diode chain (30) is connected at least between two of the diode bodies (31, 32) with the current-carrying component (21-24).

3. A connecting device according to claim 1 or claim 2, **characterised in that** the common diode lead (62) is applied to the current-carrying components (22) or to one thereof, in particular by welding, crimping, soldering, insulation-displacement or by being plugged thereon.

4. A connecting device according to any one of claims 1 to 3, **characterised in that** a plurality of current-carrying components (21-24) are provided, which in each case take the form of a busbar, a first contact zone (40) being provided on a first side for connection with at least one external electrical conductor (2, 5) and a second contact zone (50) being provided on a second side opposite the first side for connection with the electrical connection system (3, 104) of the solar module.

5. A connecting device according to claim 4, **characterised in that** the busbars (21-24) are arranged approximately parallel to one another and the diode chain (30) is arranged at an angle, in particular approximately perpendicularly, to the busbars.

6. A connecting device according to any one of the preceding claims, **characterised in that** the diode chain (30-1) is of meandering configuration.

7. A connecting device according to any one of the preceding claims, **characterised in that** the longitudinal axes of the respective diode bodies of the diode chain (30-2) are parallel to one another.

8. A connecting device according to any one of claims 1 to 5, **characterised in that** the longitudinal axes of at least two of the diode bodies of the diode chain (30-3) are offset relative to one another in the longitudinal extent of the diode bodies.

9. A connecting device according to any one of claims 1 to 5, **characterised in that** the longitudinal axes of the respective diode bodies of the diode chain (30-4) are aligned with one another in the longitudinal extent of the diode bodies.

10. A solar installation having a solar module (100) and having a connecting device (1) according to any one of the preceding claims fitted to the solar module.

11. A method of producing a connecting device (1) for connection to an electrical connection system (3, 104) of a photovoltaic solar module (100), having the following steps:
- providing at least one current-carrying component (21-24) for arrangement in a connector housing (10), which is configured for arrangement on the solar module,
- providing a plurality of diode bodies (31, 32), which are connected into a diode chain (30), the diode bodies comprising a first diode body (31) and a second diode body (32), which are connected to a common diode lead (62) and are connected together by the common diode lead (62),
- gripping and mounting the diode chain (30), in order to connect the diode chain electrically to the current-carrying component (21-24).

12. A method according to claim 11, **characterised in that** the diode chain (30) is provided by cutting to length from a store (90) of a plurality of connected-together together diode bodies (31-33).

13. A method according to claim 12, **characterised in that** the store (90) is formed by winding connected-together diode bodies (31-33) onto a storage member (91).
